# FASCICULE DE BREVET EUROPEEN

(11) **EP 4 046 817 B1**
(45) Date de publication et mention de la délivrance du brevet: **03.01.2024**
(21) Numéro de dépôt: 21158752.2
(22) Date de dépôt: 23.02.2021
(51) Int. Cl.: B44C 1/00, B23K 26/062, B23K 26/352, B23K 26/356, B41M 5/24, B44C 1/22, G04B 19/06, G04B 37/22, G04D 3/00

(54) **PROCEDE DE TRAITEMENT LASER D'UN COMPOSANT HORLOGER VISANT A EN NOIRCIR AU MOINS UNE PORTION**
VERFAHREN ZUR LASERBEHANDLUNG EINER UHRENKOMPONENTE ZUM EINSCHWÄRZEN MINDESTENS EINES TEILS DAVON
METHOD FOR LASER TREATMENT OF A TIMEPIECE COMPONENT INTENDED TO DARKEN AT LEAST ONE PORTION

(43) Date de publication de la demande: 24.08.2022
(73) Titulaire: DM Surfaces SA, 2610 Saint-Imier (CH)
(72) Inventeur: SPECHT, Tristan, 67700 Saverne (FR); GIL VILLALBA, Abel, 2610 Saint-Imier (CH); FAVRE, Raynald, 2300 La Chaux-de-Fonds (CH)
(74) Mandataire: e-Patent SA

(56) Documents cités:
- EP-A1- 1 840 107
- EP-A1- 2 825 347
- EP-B1- 2 825 347
- US-A1- 2014 175 067
- US-A1- 2014 363 608

## Description

### Domaine technique

La présente invention concerne un procédé de traitement laser d'un substrat métallique pour composant horloger, au moyen d'une source laser destinée à émettre des impulsions de durées égales ou inférieures à la picoseconde et agencée pour définir un faisceau laser incident mobile relativement au substrat et réaliser un traitement de ce dernier pour en noircir au moins une portion de manière sélective.

### Etat de la technique

De tels procédés de traitement laser de composants horlogers sont déjà connus de l'état de la technique, et sont avantageux notamment parce qu'ils permettent de se passer de l'utilisation du chrome, ce qui est très intéressant du point de vue environnemental.

Ainsi, par exemple, la demande de brevet WO 2008/097374 A2 décrit, de manière générale, comment les paramètres opératoires (par exemple la fluence ou le nombre d'impacts du faisceau laser sur une même région du substrat) mis en oeuvre pour effectuer le traitement laser d'un substrat influencent la nature de structures formées à la surface du substrat, et quel en est l'impact sur l'apparence de ce dernier. Certains paramètres opératoires décrits permettent de noircir en surface la portion du substrat qui est ainsi traitée.

Par ailleurs, la demande de brevet EP 2825347 A1 décrit un autre procédé permettant d'usiner un composant horloger, plus particulièrement de le graver au moyen d'un faisceau laser dont les propriétés permettent simultanément de changer la coloration du composant sur le trajet du faisceau laser, notamment de le noircir. Un but principal de ce procédé semble résider dans l'obtention d'un résultat global satisfaisant en termes d'apparence visuelle de la portion traitée, c'est-à-dire tant au niveau de la gravure que de la coloration, tout en réduisant le temps de traitement des composants horlogers concernés, par la mise en oeuvre de deux opérations en une seule étape de traitement. Toutefois, un examen visuel attentif du fond d'une gravure réalisée avec ce procédé permet d'identifier des microstructures du fait que celles-ci soient relativement espacées les unes des autres. Ainsi, le fond de la gravure noirci n'apparait pas comme totalement uniforme.

Le document US2014/175067 présente un substrat qui est gravé avec un laser à impulsions pour former une image ou un caractère, puis une étape de polissage de la gravure avec un laser à impulsions, ayant des paramètres différents de ceux du laser de la première étape, est réalisée; finalement une étape de traitement de surface de la gravure avec un laser à impulsions permet de noircir la partie polie, ce laser ayant des paramètres différents de la première et de la deuxième étape.

### Divulgation de l'invention

Un but principal de la présente invention est de proposer un procédé alternatif aux procédés de traitement de composants horlogers par faisceau laser connus de l'art antérieur, le procédé selon l'invention permettant la réalisation d'une portion noire sur le composant horloger traité, avec une bonne profondeur du noir obtenu et une apparence très propre, notamment une surface uniforme de la portion traitée, et donc avec une qualité perçue élevée.

A cet effet, la présente invention concerne plus particulièrement un procédé de traitement laser à impulsions d'un substrat métallique pour composant horloger du type mentionné plus haut, caractérisé par le fait qu'il comporte les étapes consistant à:
- se munir d'un substrat métallique comprenant une portion à traiter,
- mettre en oeuvre une première opération de traitement laser visant à balayer la portion à traiter avec un faisceau laser incident, suivant un premier jeu de paramètres prédéfini, adapté pour noircir la portion à traiter en créant des microstructures et des nanostructures sur essentiellement toute sa surface,
- mettre en oeuvre une deuxième opération de traitement laser visant à balayer la portion à traiter avec un faisceau laser incident, suivant un deuxième jeu de paramètres prédéfini, différent du premier jeu de paramètre prédéfini et adapté pour lisser la surface de la portion à traiter, par réduction de la rugosité de la surface de la portion à traiter d'au moins 40%, préférablement d'au moins 50%,
- mettre en oeuvre une troisième opération de traitement laser visant à balayer la portion à traiter avec un faisceau laser incident, suivant un troisième jeu de paramètres prédéfini, similaire au premier jeu de paramètres prédéfini et adapté pour noircir la portion à traiter en recréant des microstructures et des nanostructures sur essentiellement toute sa surface.

Le substrat à traiter peut être un composant horloger en tant que tel ou seulement une portion d'un composant horloger, soit réalisé d'une pièce avec le reste du composant, soit rapportée sur le reste du composant avant ou après la mise en oeuvre du procédé selon l'invention, sans sortir du cadre de cette dernière.

Grâce à ces caractéristiques, il est possible de noircir une portion à traiter avec l'obtention d'un noir profond et parfaitement uniforme, grâce à la grande finesse et à la répartition uniforme des microstructures créées. Le procédé selon l'invention permet de réaliser un tel traitement avec un contrôle très précis, donc avec une bonne reproductibilité. En effet, la première opération de traitement laser, visant à noircir la portion à traiter, permet de créer un état de surface présentant une capacité d'absorption élevée de l'énergie du faisceau laser balayant la portion à traiter lors de la deuxième opération. Il est ainsi possible d'obtenir un nouvel état de surface, présentant une coloration sensiblement grise, parfaitement adapté pour absorber l'énergie apportée par le faisceau laser lors de la troisième opération de traitement, visant à noircir à nouveau la portion à traiter, avec un résultat qualitatif amélioré en comparaison avec le résultat obtenu après mise en oeuvre de la première opération.

De manière avantageuse, on peut prévoir que le premier jeu de paramètres prédéfini inclue une valeur de fluence comprise entre 0.05 et 0.35 J/cm².

De manière alternative ou complémentaire, on peut avantageusement prévoir que le premier jeu de paramètres prédéfini inclue une valeur de taux de recouvrement longitudinal supérieure ou égale à 65% et strictement inférieure à 100%, préférablement comprise entre 65% et 85%.

De manière alternative ou complémentaire, on peut avantageusement prévoir que le deuxième jeu de paramètres prédéfini inclue une valeur de fluence comprise entre 0.15 et 1 J/cm².

De manière alternative ou complémentaire, on peut avantageusement prévoir que le deuxième jeu de paramètres prédéfini inclue une valeur de taux de recouvrement longitudinal supérieure ou égale à 85% et strictement inférieure à 100%, préférablement supérieure ou égale à 90% et inférieure à 99%.

De manière alternative ou complémentaire, on peut avantageusement prévoir que le troisième jeu de paramètres prédéfini inclue une valeur de fluence comprise entre 0.05 et 0.35 J/cm².

De manière alternative ou complémentaire, on peut avantageusement prévoir que le troisième jeu de paramètres prédéfini inclue une valeur de taux de recouvrement longitudinal supérieure ou égale à 65% et strictement inférieure à 100%, préférablement comprise entre 65% et 85%.

Selon une variante de réalisation préférée, on peut prévoir qu'au cours de la première opération et/ou de la troisième opération, la source laser soit agencée pour émettre des impulsions laser en mode "burst", en étant réparties en des groupes d'impulsions successifs, avec une période de groupe P, les impulsions d'un groupe donné étant émises pendant 20 à 100% de la période P.

Selon un mode de réalisation préféré, lorsque la portion à traiter est située dans une gravure préalablement réalisée dans le substrat métallique et présente une paroi périphérique au moins partiellement incurvée pour relier la surface libre du substrat métallique au fond de la gravure, on peut avantageusement prévoir que le procédé comporte une étape supplémentaire consistant à mettre en oeuvre une quatrième opération de traitement laser visant à balayer au moins une partie de la paroi périphérique avec un faisceau laser incident, suivant un quatrième jeu de paramètres prédéfini, différent des premier, deuxième et troisième jeux de paramètres prédéfinis et adapté pour noircir la au moins une partie de la paroi périphérique en créant des microstructures et des nanostructures sur essentiellement toute sa surface.

Dans ce cas, on peut avantageusement prévoir que le quatrième jeu de paramètres prédéfini inclue une valeur de fluence comprise entre 0.10 et 0.25 J/cm².

En outre, on peut avantageusement prévoir dans ce cas, de manière alternative ou complémentaire, que le quatrième jeu de paramètres prédéfini inclue une valeur de taux de recouvrement longitudinal supérieure ou égale à 85% et strictement inférieure à 100%, préférablement supérieure ou égale à 90% et inférieure à 99%.

Selon un mode de réalisation préféré, on peut prévoir que le substrat comporte un ou plusieurs des matériaux pris dans le groupe comprenant: les aciers, y compris les aciers inoxydables, le titane, le cuivre, le laiton, l'or, l'argent, le platine, le tungstène.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemple non limitatif et dans lesquels:
- la figure 1 représente un schéma de principe simplifié d'une source laser permettant la mise en oeuvre du procédé selon la présente invention, et
- la figure 2 représente une vue en coupe transversale schématique d'une portion à traiter située dans une gravure selon un mode de réalisation préféré de la présente invention.

### Mode(s) de réalisation de l'invention

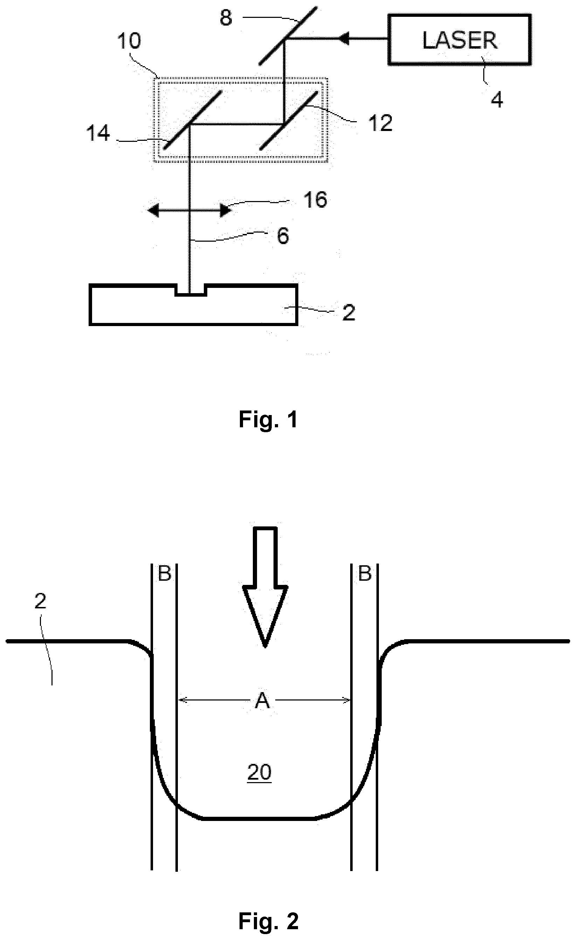

La figure 1 représente un schéma de principe simplifié d'un exemple de mise en oeuvre d'un procédé d'usinage d'un composant horloger selon un mode de réalisation préféré de la présente invention.

Plus précisément, le procédé d'usinage par faisceau laser à impulsions selon la présente invention vise à traiter un substrat métallique 2 pour un composant horloger (non représenté dans son intégralité), ce substrat métallique 2 absorbant avantageusement au moins partiellement la lumière du faisceau laser à la longueur d'onde du faisceau laser utilisé pour réaliser le traitement, préférablement entre 500 et 1100 nm. Ainsi, de manière générale, on pourra mettre en oeuvre le procédé selon l'invention en relation avec toutes sortes de matériaux susceptibles d'être usinés par laser, et le substrat pourra comporter un ou plusieurs des matériaux pris dans le groupe comprenant: les aciers, y compris les aciers inoxydables, le titane, le cuivre, le laiton, l'or, l'argent, le platine, le tungstène, à titre illustratif non limitatif.

Le substrat métallique 2 peut être directement un composant horloger en tant que tel ou seulement une portion d'un composant horloger, soit réalisée d'une pièce avec le reste du composant, soit rapportée sur le reste du composant, sans sortir du cadre de l'invention.

Par ailleurs, on pourra prévoir que le composant horloger soit directement visible sur la pièce d'horlogerie correspondante, en étant situé à l'extérieur de la boite ou à l'intérieur mais en étant visible au travers d'une glace, ou il peut être logé à l'intérieur de la boite et n'être au moins partiellement visible qu'une fois celle-ci ouverte.

De manière générale, pour réaliser l'usinage selon l'invention, on utilise une première source laser 4 agencée, en relation avec un dispositif optique, pour définir un faisceau laser incident 6 destiné à réaliser le traitement souhaité sur le substrat métallique 2 du composant horloger, c'est-à-dire un traitement visant à en noircir au moins une portion prédéfinie.

Plus précisément, le dispositif optique peut comporter, à titre illustratif non limitatif, au moins un premier miroir 8 agencé en sortie de la première source laser 4, cette dernière pouvant typiquement être associée à une tête galvanométrique 10 comprenant un jeu de miroirs supplémentaires, ici schématisés sous la forme de deux miroirs 12 et 14, permettant de contrôler la direction de propagation du faisceau laser incident 6 et de faire faire un balayage à ce dernier pour réaliser le traitement requis sur le substrat métallique 2, selon l'invention. Le dispositif optique comporte également, de manière avantageuse, un dispositif de focalisation 16, schématisé ici sous la forme d'une lentille convergente pour définir un plan de focalisation souhaité pour le faisceau laser incident 6. En alternative ou en complément, il est possible de prévoir un support mobile pour le substrat métallique 2, pour pouvoir le déplacer relativement au faisceau laser incident, sans sortir du cadre de la présente invention.

De manière avantageuse, la première source laser 4 peut être associée au dispositif optique directement à l'intérieur d'une machine à commande numérique multi-axes.

Lorsqu'une machine à commande numérique est utilisée, elle est avantageusement programmée pour contrôler le faisceau laser incident 6 et ses déplacements de façon appropriée pour procéder au traitement du substrat métallique 2 suivant un trajet prédéfini. La machine à commande numérique comporte typiquement un dispositif de pilotage, à cet effet, prenant en compte la géométrie du substrat métallique 2 et du traitement à réaliser, et définissant la vitesse de balayage de la surface à traiter par le faisceau laser incident 6 ainsi que l'amplitude de mouvement du faisceau et la génération des impulsions laser, de manière à obtenir le résultat souhaité.

De manière avantageuse, la première source laser est choisie de telle manière qu'elle définisse un faisceau laser incident 6 composé d'impulsions lumineuses dont la durée est de l'ordre de grandeur de la picoseconde ou plus courte. De plus, le dispositif optique est préférablement agencé de telle manière que le faisceau laser incident 6 présente un plan focal situé sensiblement à la surface du substrat métallique 2.

Typiquement, pour traiter des substrats tels que ceux mentionnés plus haut, on pourra choisir une première source laser 4 telle que le faisceau laser incident 6 soit composé d'impulsions présentant une fréquence moyenne comprise entre 1 et 200 kHz, et telle que celui-ci présente une puissance moyenne comprise entre 1 et 10 Watts. En outre, on peut avantageusement prévoir que le faisceau laser incident présente une énergie d'impulsion comprise entre 2 et 10 µJ et que la vitesse du déplacement relatif entre le faisceau laser incident et le substrat soit comprise entre 10 et 300 mm/s. Ces différents paramètres peuvent avantageusement être affinés pour prendre en compte la composition exacte du substrat métallique.

De manière préférée, le traitement laser selon la présente invention est réalisé par une programmation adéquate de la source laser (dans son acception large, c'est-à-dire en incluant le dispositif optique et/ou un support mobile permettant d'induire un déplacement relatif entre le faisceau incident et le substrat métallique), autrement dit en définissant au moins un vecteur, préférablement une pluralité de vecteurs, dont chacun est délimité par un point de départ et un point d'arrivée et composé d'un trajet à parcourir par le faisceau laser incident 6 relativement au substrat métallique 2, et d'une série d'impacts du faisceau laser incident 6 le long du trajet.

Le procédé selon la présente invention concerne indifféremment la mise en oeuvre de simples passes ou de passes multiples, éventuellement croisées ("cross-hatch").

La figure 2 représente une vue en coupe transversale schématique d'une portion du substrat métallique 2, illustrant la mise en oeuvre d'un procédé de traitement de ce substrat selon un mode de réalisation préféré de la présente invention.

Selon ce mode de réalisation préféré illustratif et non limitatif, le substrat métallique 2 présente une portion gravée, la gravure 20 correspondante étant réalisée préalablement à la mise en oeuvre du procédé de traitement selon l'invention. Le procédé de traitement laser selon la présente invention peut bien entendu être mis en oeuvre directement sur la surface libre d'un substrat qui ne serait pas gravée au préalable, sans pour autant sortir du cadre de l'invention tel que défini par les revendications.

La gravure peut par exemple être réalisée par laser ou par attaque chimique. Lorsqu'elle est réalisée par un procédé de gravure laser conventionnel, la gravure présente typiquement des flancs droits reliés au fond de la gravure par des jonctions sensiblement à angle droit. Il est possible d'introduire un décalage temporel entre le début du déplacement du faisceau laser, au début de chaque vecteur de gravure, et le début de l'émission des impulsions laser, pour incurver la jonction entre le flanc initial et le fond de la gravure. De manière similaire, il est possible d'arrêter l'émission des impulsions laser avant que le faisceau laser n'ait atteint la fin d'un vecteur de gravure pour incurver la jonction entre le flanc final et le fond de la gravure, comme illustré sur la figure 2. Une gravure réalisée par attaque chimique présente également un profil similaire à celui illustré sur la figure 2.

Conformément à la présente invention, il est prévu que le procédé de traitement laser du substrat métallique 2 comporte les étapes consistant à:
- mettre en oeuvre une première opération de traitement laser visant à balayer la portion à traiter, repérée par la lettre A sur la figure 2, avec un faisceau laser incident, suivant un premier jeu de paramètres prédéfini, adapté pour noircir la portion A à traiter en créant des microstructures et des nanostructures sur essentiellement toute sa surface,
- mettre en oeuvre une deuxième opération de traitement laser visant à balayer la portion A à traiter avec un faisceau laser incident, suivant un deuxième jeu de paramètres prédéfini, différent du premier jeu de paramètre prédéfini et adapté pour lisser la surface de la portion A à traiter, par réduction de la rugosité de la surface de la portion A à traiter d'au moins 40%, préférablement d'au moins 50%,
- mettre en oeuvre une troisième opération de traitement laser visant à balayer la portion A à traiter avec un faisceau laser incident, suivant un troisième jeu de paramètres prédéfini, similaire au premier jeu de paramètres prédéfini et adapté pour noircir la portion A à traiter en recréant des microstructures et des nanostructures sur essentiellement toute sa surface.

De manière préférée, le premier jeu de paramètres prédéfini inclut une valeur de fluence comprise entre 0.05 et 0.35 J/cm².

De manière alternative ou complémentaire, le premier jeu de paramètres prédéfini inclut préférablement une valeur de taux de recouvrement longitudinal supérieure ou égale à 65% et strictement inférieure à 100%, préférablement comprise entre 65% et 85%.

Par ailleurs, le deuxième jeu de paramètres prédéfini inclut préférablement une valeur de fluence comprise entre 0.15 et 1 J/cm², et une valeur de taux de recouvrement longitudinal supérieure ou égale à 85% et strictement inférieure à 100%, préférablement supérieure ou égale à 90% et inférieure à 99%.

Par ailleurs, le troisième jeu de paramètres prédéfini inclut préférablement une valeur de fluence comprise entre 0.05 et 0.35 J/cm², et une valeur de taux de recouvrement longitudinal supérieure ou égale à 65% et strictement inférieure à 100%, préférablement comprise entre 65% et 85%.

Lorsque la portion A à traiter est située dans une gravure et présente une paroi périphérique au moins partiellement incurvée pour relier la surface libre du substrat métallique 2 au fond de la gravure, comme illustré sur la figure 2, on peut avantageusement prévoir que le procédé comporte une étape supplémentaire, consistant à mettre en oeuvre une quatrième opération de traitement laser visant à balayer au moins une partie de la paroi périphérique (l'ensemble de la paroi périphérique étant repéré par les lettres B sur la figure 2), avec un faisceau laser incident, suivant un quatrième jeu de paramètres prédéfini, différent des premier, deuxième et troisième jeux de paramètres prédéfinis et adapté pour noircir la au moins une partie de la paroi périphérique en créant des microstructures et des nanostructures sur essentiellement toute sa surface.

Selon un mode de réalisation préféré, le quatrième jeu de paramètres prédéfini inclut une valeur de fluence comprise entre 0.10 et 0.25 J/cm².

En outre, on peut avantageusement prévoir dans ce cas, de manière alternative ou complémentaire, que le quatrième jeu de paramètres prédéfini inclue une valeur de taux de recouvrement longitudinal supérieure ou égale à 85% et strictement inférieure à 100%, préférablement supérieure ou égale à 90% et inférieure à 99%.

Grâce à cette opération supplémentaire, on obtient un aspect noir relativement uniforme de la portion traitée du substrat métallique 2, tant au niveau du fond de la gravure que de ses flancs, ce qui lui confère une apparence d'un niveau qualitatif très élevé.

De manière générale, la source laser est préférablement programmée de telle manière que le taux de recouvrement latéral soit compris entre 50 et 98% lors de la mise en oeuvre des trois premières opérations de traitement du fond de la gravure (ou de la surface libre du substrat le cas échéant). Généralement, une seule passe devrait suffire pour traiter la paroi périphérique B de la gravure, mais un taux de recouvrement latéral similaire peut être mis en oeuvre lorsque plusieurs passes sont nécessaires.

Selon une variante de réalisation préférée de mise en oeuvre des première et troisième opérations visant à créer des microstructures et, surtout, des nanostructures, on utilise préférablement un mode "burst" de la source laser 4. De manière générale, une source laser émet typiquement des impulsions de faible énergie, avec une fréquence propre Fosc, filtrées pour sélectionner des impulsions à une fréquence Fpp qui est un quotient entier de la fréquence propre Fosc. Ces impulsions sont généralement amplifiées grâce à effet de pompage, par l'association d'une autre source laser permettant d'augmenter l'énergie des impulsions ainsi obtenues. Ces impulsions peuvent ensuite être fractionnées, en mode burst, en groupes d'impulsions d'énergie réduite, de fréquence Fpp, les impulsions au sein de chaque groupe présentant une fréquence Fosc. Ainsi, le mode burst permet d'éclater chaque impulsion d'énergie E, en groupes de N impulsions dont chacune présente une énergie E/N. Il est alors possible d'émettre des groupes d'impulsions d'énergie réduite avec une fréquence F qui est un quotient entier de la fréquence de groupes Fpp. Ainsi, au cours d'une période P=1/F, il est possible d'émettre au maximum R groupes d'impulsions d'énergie réduite, R étant égal à P/Ppp, avec Ppp=1/Fpp.

La Demanderesse a constaté, au cours de ses essais expérimentaux, qu'une répartition dans le temps de l'énergie transmise au substrat permet d'améliorer la qualité du traitement noir réalisé.

Par conséquent, l'utilisation du mode burst se révèle avantageuse pour répartir l'énergie d'une seule impulsion sous la forme d'un groupe d'impulsions d'énergie réduite (dont la somme correspond à l'énergie de l'impulsion unique).

Le mode burst peut être modelé plus finement en fonction des besoins, en définissant le nombre de groupes d'impulsions émises au cours de chaque période P, avec la limite supérieure égale à R comme exposé plus haut. Lorsque le nombre de groupes d'impulsions est inférieur à R, on comprend que chaque période P comporte un certain nombre de groupes d'impulsions puis un délai d'attente, sans impulsion, jusqu'à la fin de la période, avant le début de la période suivante. Ainsi, en comparaison avec l'utilisation d'impulsions de période P de forte énergie, un tel mode burst permet d'étaler l'apport de la même quantité d'énergie au substrat sur une fraction de la même période P, au lieu de le faire sur la durée d'une impulsion unique, tout en préservant éventuellement un délai de repos à la matière.

Finalement, la Demanderesse a constaté qu'une répartition des impulsions sur 20 à 100% de la durée de la période P permet d'obtenir un résultat de meilleure qualité, y compris lorsque chaque groupe d'impulsion n'est composé que d'une seule impulsion.

On notera que la mise en oeuvre du mode burst implique une variation du taux de recouvrement longitudinal puisque l'émission des impulsions laser répond à deux périodes différentes, une période plus longue définissant les moments auxquels des groupes d'impulsions sont émis, et une période plus courte séparant deux impulsions successives au sein d'un même groupe d'impulsions.

Ainsi, par exemple, avec Fpp=1823 kHz et une vitesse de déplacement relatif entre le faisceau laser et le substrat de 50 mm/s, on obtient une distance de 0,0275 µm entre deux impacts successifs, soit un taux de recouvrement longitudinal supérieur à 99% avec un diamètre d'impact de l'ordre de 40 µm. Toutefois, lorsque la fréquence de travail du faisceau laser F est fixée à 5 kHz, on obtient une distance entre deux impacts successifs de 10 µm pour une même vitesse de déplacement relatif, soit un taux de recouvrement longitudinal de seulement 75%. En mettant en oeuvre un mode burst, on obtient encore un résultat différent. A titre d'exemple, en fixant N=95, la source laser émet des groupes de 95 impulsions à une fréquence de 5 kHz, la fréquence des impulsions dans chaque groupe étant de 1823 kHz. De ce fait, on a, lors de chaque période de 200 µs (correspondant à la fréquence F de 5 kHz), une première phase lors de laquelle les 95 impulsions sont émises à la fréquence de 1823 kHz, soit pendant 52,25 µs, puis une deuxième phase s'étendant jusqu'à la fin de la période de 200 µs, au cours de laquelle aucune impulsion n'est émise. Dans ce cas, le taux de recouvrement longitudinal est supérieur à 99% lors de la première phase tandis qu'il est plutôt de l'ordre de 80% lors de la deuxième phase.

L'homme du métier ne rencontrera pas de difficulté particulière pour sélectionner des paramètres de fonctionnement de la source laser (notamment ceux de mise en oeuvre d'un éventuel mode burst) en fonction de ses propres besoins, de la source laser qu'il a à sa disposition, ou encore de la nature du substrat à traiter.

La mise en oeuvre de la présente invention n'est pas limitée à un composant horloger faisant partie de l'habillage d'une pièce d'horlogerie. En effet, tout composant horloger peut permettre la mise en oeuvre de la présente invention pour conférer un caractère distinctif au composant horloger et donc à la pièce d'horlogerie correspondante. L'homme du métier ne rencontrera aucune difficulté particulière pour adapter le présent enseignement à la fabrication de composants horlogers d'habillage ou du mouvement horloger.

## Revendications

1. Procédé de traitement laser d'un substrat métallique (2) pour composant horloger, au moyen d'une source laser (4, 8, 10) destinée à émettre des impulsions de durées égales ou inférieures à la picoseconde et agencée pour définir un faisceau laser incident (6) mobile relativement audit substrat (2) et réaliser un traitement de ce dernier pour en noircir au moins une portion (A) de manière sélective, comportant les étapes consistant à:
- se munir d'un substrat métallique (2) comprenant une portion à traiter,
- mettre en oeuvre une première opération de traitement laser visant à balayer ladite portion (A) à traiter avec un faisceau laser incident (6), suivant un premier jeu de paramètres prédéfini, adapté pour noircir ladite portion (A) à traiter en créant des microstructures et des nanostructures sur essentiellement toute sa surface,
**caractérisé en ce que** le procédé comporte en outre les étapes consistant à:
- mettre en oeuvre une deuxième opération de traitement laser visant à balayer ladite portion (A) à traiter avec un faisceau laser incident (6), suivant un deuxième jeu de paramètres prédéfini, différent dudit premier jeu de paramètre prédéfini et adapté pour lisser la surface de ladite portion (A) à traiter, par réduction de la rugosité de ladite portion à traiter (A) d'au moins 40%, préférablement d'au moins 50%,
- mettre en oeuvre une troisième opération de traitement laser visant à balayer ladite portion (A) à traiter avec un faisceau laser incident (6), suivant un troisième jeu de paramètres prédéfini, similaire audit premier jeu de paramètres prédéfini et adapté pour noircir ladite portion (A) à traiter en recréant des microstructures et des nanostructures sur essentiellement toute sa surface.

2. Procédé selon la revendication 1, **caractérisé en ce que** ledit premier jeu de paramètres prédéfini inclut une valeur de fluence comprise entre 0.05 et 0.35 J/cm².

3. Procédé selon la revendication 1 ou 2, **caractérisé en ce que** ledit premier jeu de paramètres prédéfini inclut une valeur de taux de recouvrement longitudinal supérieure ou égale à 65% et strictement inférieure à 100%, préférablement comprise entre 65% et 85%.

4. Procédé selon l'une des revendications précédentes, **caractérisé en ce que** ledit deuxième jeu de paramètres prédéfini inclut une valeur de fluence comprise entre 0.15 et 1 J/cm².

5. Procédé selon l'une des revendications précédentes, **caractérisé en ce que** ledit deuxième jeu de paramètres prédéfini inclut une valeur de taux de recouvrement longitudinal supérieure ou égale à 85% et strictement inférieure à 100%, préférablement supérieure ou égale à 90% et inférieure à 99%.

6. Procédé selon l'une des revendications précédentes, **caractérisé en ce que** ledit troisième jeu de paramètres prédéfini inclut une valeur de fluence comprise entre 0.05 et 0.35 J/cm².

7. Procédé selon l'une des revendications précédentes, **caractérisé en ce que** ledit troisième jeu de paramètres prédéfini inclut une valeur de taux de recouvrement longitudinal supérieure ou égale à 65% et strictement inférieure à 100%, préférablement comprise entre 65% et 85%.

8. Procédé selon l'une des revendications précédentes, **caractérisé en ce qu'**au cours de ladite première opération et/ou de ladite troisième opération, ladite source laser (4, 8, 10) est agencée pour émettre des impulsions laser en mode "burst", en étant réparties en des groupes d'impulsions successifs, avec une période de groupe P, lesdites impulsions d'un groupe donné étant émises pendant 20 à 100% de ladite période P.

9. Procédé selon l'une des revendications précédentes, ladite portion (A) à traiter étant située dans une gravure (20) préalablement réalisée dans ledit substrat métallique (2) et présentant une paroi périphérique (B) au moins partiellement incurvée pour relier la surface libre dudit substrat métallique (2) au fond de ladite gravure (20), **caractérisé en ce qu'**il comporte une étape supplémentaire consistant à mettre en oeuvre une quatrième opération de traitement laser visant à balayer au moins une partie de ladite paroi périphérique (B) avec un faisceau laser incident (6), suivant un quatrième jeu de paramètres prédéfini, différent desdits premier, deuxième et troisième jeux de paramètres prédéfinis et adapté pour noircir ladite au moins une partie de ladite paroi périphérique (B) en créant des microstructures et des nanostructures sur essentiellement toute sa surface.

10. Procédé selon la revendication 9, **caractérisé en ce que** ledit quatrième jeu de paramètres prédéfini inclut une valeur de fluence comprise entre 0.10 et 0.25 J/cm².

11. Procédé selon la revendication 9 ou 10, **caractérisé en ce que** ledit quatrième jeu de paramètres prédéfini inclut une valeur de taux de recouvrement longitudinal supérieure ou égale à 85% et strictement inférieure à 100%, préférablement supérieure ou égale à 90% et inférieure à 99%.

12. Procédé selon l'une des revendications précédentes, **caractérisé en ce que** ledit substrat métallique (2) comporte un ou plusieurs des matériaux pris dans le groupe comprenant: les aciers, y compris les aciers inoxydables, le titane, le cuivre, le laiton, l'or, l'argent, le platine, le tungstène.

## Patentansprüche

1. Verfahren zur Laserbehandlung eines Metallsubstrats (2) für Uhrenkomponenten mit Hilfe einer Laserquelle (4, 8, 10), die dazu bestimmt ist, Impulse mit einer Dauer von gleich oder kleiner als eine Pikosekunde auszusenden, und die so beschaffen ist, dass sie einen einfallenden Laserstrahl (6) definiert, der relativ zu dem Substrat (2) beweglich ist, und eine Behandlung des letzteren durchführt, um mindestens einen Abschnitt (A) selektiv zu schwärzen, mit den Schritten, die darin bestehen:
- Bereitstellen eines Metallsubstrats (2), das einen zu behandelnden Abschnitt umfasst,
- Durchführen eines ersten Laserbehandlungsvorgangs zum Abtasten des zu behandelnden Abschnitts (A) mit einem einfallenden Laserstrahl (6) gemäß einem ersten Satz von vordefinierten Parametern, der geeignet ist, den zu behandelnden Abschnitt (A) durch Erzeugen von Mikro- und Nanostrukturen auf im Wesentlichen seiner gesamten Oberfläche zu schwärzen,
**dadurch gekennzeichnet, dass** das Verfahren ferner die folgenden Schritte umfasst:
- Durchführen eines zweiten Laserbehandlungsvorgangs zum Abtasten des zu behandelnden Abschnitts (A) mit einem einfallenden Laserstrahl (6) gemäß einem zweiten Satz von vordefinierten Parametern, der sich von dem ersten vordefinierten Parametersatz unterscheidet und geeignet ist, die Oberfläche des zu behandelnden Abschnitts (A) zu glätten, indem die Rauheit des zu behandelnden Abschnitts (A) um mindestens 40%, vorzugsweise um mindestens 50%, reduziert wird,
- Durchführen eines dritten Laserbearbeitungsvorgangs zum Abtasten des zu behandelnden Abschnitts (A) mit einem einfallenden Laserstrahl (6), nach einem dritten vordefinierten Satz von Parametern, der dem ersten vordefinierten Satz von Parametern ähnlich und geeignet ist, dass der zu behandelnde Abschnitt (A) geschwärzt wird, indem Mikro- und Nanostrukturen im Wesentlichen auf seiner gesamten Oberfläche neu erzeugt werden.

2. Verfahren nach Anspruch 1, **dadurch gekennzeichnet, dass** der erste Satz von vordefinierten Parametern einen Fluenzwert zwischen 0,05 und 0,35 J/cm2 einschließt.

3. Verfahren nach Anspruch 1 oder 2, **dadurch gekennzeichnet, dass** der erste Satz von vordefinierten Parametern einen Wert für den Längsüberdeckungsgrad von größer oder gleich 65% und strikt unter 100%, vorzugsweise zwischen 65% und 85%, einschließt.

4. Verfahren nach einem der vorhergehenden Ansprüche, **dadurch gekennzeichnet, dass** der zweite Satz von vordefinierten Parametern einen Fluenzwert zwischen 0,15 und 1 J/cm2 einschließt.

5. Verfahren nach einem der vorhergehenden Ansprüche, **dadurch gekennzeichnet, dass** der zweite Satz von vordefinierten Parametern einen Wert für die Längsüberdeckung von 85% oder mehr und strikt unter 100%, vorzugsweise 90% oder mehr und unter 99%, einschließt.

6. Verfahren nach einem der vorhergehenden Ansprüche, **dadurch gekennzeichnet, dass** der dritte Satz von vordefinierten Parametern einen Fluenzwert zwischen 0,05 und 0,35 J/cm2 einschließt.

7. Verfahren nach einem der vorhergehenden Ansprüche, **dadurch gekennzeichnet, dass** der dritte Satz von vordefinierten Parametern einen Wert für den Längsüberdeckungsgrad von größer oder gleich 65% und strikt unter 100%, vorzugsweise zwischen 65% und 85%, einschließt.

8. Verfahren nach einem der vorhergehenden Ansprüche, **dadurch gekennzeichnet, dass** während des ersten Schritts und/oder des dritten Schritts die Laserquelle (4, 8, 10) so angeordnet ist, dass sie Laserimpulse im "Burst"-Modus emittiert, indem sie in aufeinanderfolgende Impulsgruppen mit einer Gruppenperiode P aufgeteilt wird, wobei die Impulse einer gegebenen Gruppe für 20 bis 100% der Periode P emittiert werden.

9. Verfahren nach einem der vorhergehenden Ansprüche, wobei sich der zu behandelnde Abschnitt (A) in einer Gravur (20) befindet, die zuvor in das Metallsubstrat (2) eingebracht wurde und eine Umfangswand (B) aufweist, die zumindest teilweise gekrümmt ist, um die freie Oberfläche des Metallsubstrats (2) mit dem Boden der Gravur (20) zu verbinden, **dadurch gekennzeichnet, dass** es einen weiteren Schritt umfasst, einen vierten Laserbehandlungsvorgang durchzuführen, um mindestens einen Teil der Umfangswand (B) mit einem einfallenden Laserstrahl (6) abzutasten, gemäß einem vierten Satz von vordefinierten Parametern, die sich von dem ersten, zweiten und dritten Satz von vordefinierten Parametern unterscheiden und geeignet sind, den mindestens einen Teil der Umfangswand (B) durch Erzeugen von Mikro- und Nanostrukturen im Wesentlichen über ihre gesamte Oberfläche zu schwärzen.

10. Verfahren nach Anspruch 9, **dadurch gekennzeichnet, dass** der vierte Satz von vordefinierten Parametern einen Fluenzwert zwischen 0,10 und 0,25 J/cm2 einschließt.

11. Verfahren nach Anspruch 9 oder 10, **dadurch gekennzeichnet, dass** der vierte Satz von vordefinierten Parametern einen Wert für den Längsüberdeckungsgrad von größer oder gleich 85% und strikt unter 100%, vorzugsweise größer oder gleich 90% und unter 99%, einschließt.

12. Verfahren nach einem der vorhergehenden Ansprüche, **dadurch gekennzeichnet, dass** das Metallsubstrat (2) eines oder mehrere der folgenden Materialien umfasst: Stähle, einschließlich Edelstähle, Titan, Kupfer, Messing, Gold, Silber, Platin, Wolfram.

## Claims

1. Method of laser treatment of a metal substrate (2) for a watch component, by means of a laser source (4, 8, 10) intended to emit pulses with durations equal to or less than one picosecond and arranged to define an incident laser beam (6) which is mobile relative to said substrate (2) and to carry out a treatment of the latter in order to selectively blacken at least one portion (A) thereof, comprising the steps consisting of:
- providing a metal substrate (2) comprising a portion to be treated,
- implementing a first laser treatment operation aimed at scanning said portion (A) to be treated with an incident laser beam (6), in accordance with a first set of predefined parameters, adapted to blacken said portion (A) to be treated by creating microstructures and nanostructures over essentially its entire surface,
**characterized in that** the method further comprises the steps consisting of:
- implementing a second laser treatment operation aimed at scanning said portion (A) to be treated with an incident laser beam (6), in accordance with a second set of predefined parameters, different from said first set of predefined parameters and adapted to smooth the surface of said portion (A) to be treated, by reducing the roughness of said portion (A) to be treated by at least 40%, preferably by at least 50%,
- implementing a third laser treatment operation aimed at scanning said portion (A) to be treated with an incident laser beam (6), according to a third set of predefined parameters, similar to said first set of predefined parameters and adapted to blacken said portion (A) to be treated by recreating microstructures and nanostructures over substantially its entire surface.

2. Method according to claim 1, **characterized in that** said first set of predefined parameters includes a fluence value of between 0.05 and 0.35 J/cm2.

3. Method according to claim 1 or 2, **characterized in that** said first set of predefined parameters includes a value of longitudinal overlap rate greater than or equal to 65% and strictly less than 100%, preferably between 65% and 85%.

4. Method according to one of the preceding claims, **characterized in that** said second set of predefined parameters includes a fluence value of between 0.15 and 1 J/cm2.

5. Method according to one of the preceding claims, **characterized in that** said second set of predefined parameters includes a value of longitudinal overlap rate greater than or equal to 85% and strictly less than 100%, preferably greater than or equal to 90% and less than 99%.

6. Method according to one of the preceding claims, **characterized in that** said third set of predefined parameters includes a fluence value of between 0.05 and 0.35 J/cm2.

7. Method according to one of the preceding claims, **characterized in that** said third set of predefined parameters includes a value of longitudinal overlap rate greater than or equal to 65% and strictly less than 100%, preferably between 65% and 85%.

8. Method according to any of the preceding claims, **characterized in that** during said first operation and/or said third operation, said laser source (4, 8, 10) is arranged to emit laser pulses in "burst" mode, being divided into successive groups of pulses, with a group period P, said pulses of a given group being emitted for 20 to 100% of said period P.

9. Method according to one of the preceding claims, said portion (A) to be treated being located in an etching (20) previously made in said metal substrate (2) and having a peripheral wall (B) at least partially curved to connect the free surface of said metal substrate (2) to the bottom of said etching (20), **characterized in that** it comprises a further step consisting in implementing a fourth laser treatment operation aimed at scanning at least one portion of said peripheral wall (B) with an incident laser beam (6), according to a fourth set of predefined parameters, different from said first, second and third sets of predefined parameters and adapted to blacken said at least one portion of said peripheral wall (B) by creating microstructures and nanostructures over essentially its entire surface.

10. A method according to claim 9, **characterized in that** said fourth set of predefined parameters includes a fluence value of between 0.10 and 0.25 J/cm2.

11. Method according to claim 9 or 10, **characterized in that** said fourth set of predefined parameters includes a value of longitudinal overlap rate greater than or equal to 85% and strictly less than 100%, preferably greater than or equal to 90% and less than 99%.

12. Process according to one of the preceding claims, **characterized in that** said metal substrate (2) comprises one or more of the materials taken from the group comprising: steels, including stainless steels, titanium, copper, brass, gold, silver, platinum and tungsten.
